# EUROPÄISCHE PATENTSCHRIFT

(11) **EP 4 141 306 B1**
(45) Veröffentlichungstag und Bekanntmachung des Hinweises auf die Patenterteilung: **22.01.2025**
(21) Anmeldenummer: 22190302.4
(22) Anmeldetag: 12.08.2022
(51) Int. Cl.: F16L 11/04, B32B 1/08, F16L 57/00, F16L 11/12

(54) **SCHLAUCH, INSBESONDERE FÜR KRAFTFAHRZEUGE**
HOSE, PARTICULARLY FOR MOTOR VEHICLES
TUYAU FLEXIBLE, EN PARTICULIER POUR VÉHICULES AUTOMOBILES

(30) Priorität: 25.08.2021 DE 102021209346
(43) Veröffentlichungstag der Anmeldung: 01.03.2023
(73) Patentinhaber: ContiTech Techno-Chemie GmbH, 61184 Karben (DE)
(72) Erfinder: Brühne, Klaus, 30165 Hannover (DE); Schmelter, Klaus, 30165 Hannover (DE); Sinemus, Martin, 30165 Hannover (DE)
(74) Vertreter: Continental Corporation

(56) Entgegenhaltungen:
- EP-A1- 1 017 748
- EP-A1- 3 175 977
- DE-A1- 19 823 298
- DE-C1- 3 538 706
- US-A1- 2021 139 672

## Beschreibung

Die Erfindung betrifft einen Schlauch, der insbesondere im Kraftfahrzeug Verwendung findet und der nicht von Raubtieren, wie z. Bsp. Mardern, oder von Nagetieren, wie z. Bsp. Ratten, zerbissen wird.

Insbesondere Marder beißen gerne in Schläuche jeglicher Art, wie sie im Kraftfahrzeug, vor allem im Motorraum zu finden sind. Hierbei kann es sich um Kühl- und Scheibenwischwasserschläuche, Bremsschläuche oder um Kraftstoffleitungen handeln. Marderbisse sind für Kraftfahrzeuge gefährlich. So können bspw.

Löcher in Kühlwasserschläuchen eine Überhitzung des Motors und als Folge einen totalen Motorschaden nach sich ziehen. Bei Leckagen an Bremsschläuchen kann dadurch die Bremsfunktion versagen.

Bisher wurden zur Vermeidung von Bissen von Raubtieren und / oder Nagetieren überwiegend Schutzhüllen verschiedenster Art zusätzlich auf den gefährdeten Schläuchen angebracht.

In DE 10343040A1 wird hierzu bspw. ein zusätzlicher Metallwedel auf den Schlauch aufgezogen. Derartige Metallwedel sind allerdings im Bereich des Motorraums, wo es zu Spannungsentladungen kommen kann, nicht verwendbar.

Bei mit Edelstahl umflochtenen Schläuchen ist die Armierung aufwendiger, die Flexibilität eingeschränkt, das Gewicht höher und eine Formschlauchherstellung mit engen Biegeradien nicht möglich. Die Aufbringung von zusätzlichen Schutzschläuchen ist zudem aufwendig und kostenintensiv.

In DE 4426493A1 werden zum Schutz vor Bissen die Schläuche mit hochzugfesten Fäden oder Strängen umstrickt. Auch diese Schläuche sind nur bedingt zum Einsatz im Kraftfahrzeugbereich geeignet, da sie meist nicht die geforderten physikalischen Eigenschaften aufweisen.

Bekannt sind ebenso Repellents, die ggf. in die Kautschukmischung einer Schlauchschicht hinzugefügt werden können. Allerdings wirken sich diese

Repellents zumeist ebenso negativ auf die für den jeweiligen Anwendungszweck geforderten Eigenschaften aus.

In WO2019/137660A1 wird versucht durch eine definierte Abfolge von Kautschukschichten im Schlauch, d.h. eine Fluorkautschukschicht als Innenschicht, eine Silikonkautschukschicht als Zwischenschicht und eine EPDM- und / oder EPM-Schicht als Außenschicht, Nagetiere davon abzuhalten, diese Schläuche anzubeißen oder durchzubeißen. Allerdings ist man hierbei auf diese Materialien in der genannten Reihenfolge eingeschränkt, welche wiederum nicht für alle Anwendungen die erforderlichen Eigenschaften mitbringen.

In EP1017748A1 wird versucht Nagetiere durch eine Beschichtungszusammensetzung, die ultrafeine harte Keramikpartikel, ein Bindemittel und ein Polymer enthält, fern zu halten.

Die Aufgabe der Erfindung besteht somit darin, einen Schlauch, insbesondere zur Verwendung im Kraftfahrzeug, bereitzustellen, der sich durch eine verbesserte Bissfestigkeit gegenüber Bissen von Raubtieren, wie z. Bsp. Mardern, oder von Nagetieren, wie z. Bsp. Ratten, auszeichnet, der keine Einschränkungen hinsichtlich der Materialauswahl der benötigten einzelnen Schlauchschichten notwendig macht und der gleichzeitig die physikalischen Eigenschaften des Schlauches nicht negativ beeinträchtigt. Der Schlauch soll zudem ohne mechanischen Zusatzschutz Raubtiere, wie bspw. Marder, vergrämen und damit einen Bissschutz gewährleisten.

Gelöst wird diese Aufgabe dadurch, dass der Schlauch auf seiner nach außen weisenden Schicht eine zusätzliche Beschichtung enthält, wobei die Beschichtung wenigstens ein Polymer und wenigstens einen Bitterstoff enthält, wobei der Bitterstoff Denatoniumbenzoat ist und dass der Polymer wenigstens ein Acrylat umfasst.

Die nach außen weisende Schicht wird häufig auch als Schlauchoberfläche bezeichnet.

Überraschenderweise haben Versuche gezeigt, dass ein Schlauch mit einer derartigen zusätzlichen Beschichtung eine besonders gute Beständigkeit gegenüber Bissen von Raubtieren, insbesondere Mardern, oder Nagetieren aufweist. Der Bitterstoff kann durch äußere Einflüsse wie z. B. Regenwasser oder mechanische Einwirkungen nicht entfernt werden, da er gemeinsam mit dem

Polymer als Beschichtung aufgebracht wird und dort in der Polymermatrix gebunden ist.

Die zusätzliche Beschichtung wird bevorzugt in Form einer wässrigen Polymerdispersion, wässrigen Polymeremulsion oder wässrigen Polymerlösung auf die Außenseite des Schlauches aufgebracht. Nach der Trocknung, d.h der Wasserverdunstung, ist der Bitterstoff in der Polymermatrix homogen verteilt und gebunden.

In einer bevorzugten Ausführungsform wird die zusätzliche Beschichtung nach Abschluss der Schlauchfertigung, d.h. nach der letzten Vulkanisation, aufgebracht, um ein etwaiges Zersetzen des Bitterstoffes zu reduzieren bzw. zu vermeiden.

Als Polymer für die zusätzliche Beschichtung wird wenigstens ein Acrylat eingesetzt. Dieses hat den Vorteil, dass es bei Raumtemperatur selbstvernetzend ist und somit die Beschichtung auch nach der letzten Vulkanisation aufgebracht werden kann.

Prinzipiell sind hierfür alle der fachkundigen Person bekannten Acrylate geeignet. Handelt es sich bei der zusätzlichen Beschichtung um eine wässrige Polymerdispersion, so ist diese somit bevorzugt auf der Basis einer wässrigen Acrylatdispersion.

Als Bitterstoff für die zusätzliche Beschichtung wird Denatoniumbenzoat verwendet. Als Bitterstoffe werden alle chemischen Verbindungen bezeichnet, die einen bitteren Geschmack aufweisen. Hierzu zählen zum Beispiel Glycoside, Isoprenoide, Alkaloide, Aminosäuren und Mischungen daraus.

Bevorzugt sind Bitterstoffe mit einem Bitterwert von mindestens 10.000, wie bspw. Naringin (Bitterwert = 10.000), Saccharoseoctaacetat (Bitterwert = 100.000) Chininhydrochlorid (Bitterwert = 200.000), Brucin (Bitterwert = 3.000.000), Absinthin (Bitterwert = 3.000.000), Quassin (Bitterwert = 13.000.000); Amoarogentin (Bitterwert = 58.000.000), Columbin (Bitterwert = 60.000.000), Denatoniumbenzoat (Bitterwert > 100.000.000) und Mischungen daraus.

Die Verwendung von Denatoniumbenzoat, welches unter dem Handelsnamen Bitrex^{®} auf dem Markt einfach verfügbar und zudem ungiftig ist, bietet als bitterste bekannte Substanz bereits in vergleichsweise geringen Mengen ausreichenden Schutz vor Raubtierbissen.

Der Bitterwert ist der reziproke Wert der Konzentration eines(r) Stoffes (Droge), die gerade noch bitter schmeckt. Die Bestimmung erfolgt organoleptisch. Als Standardsubstanz wird Chinin verwendet, um individuelle Unterschiede bei der Wahrnehmung des Geschmacks auszugleichen. Ein Bitterwert von 1000 bedeutet, dass 1 g der Substanz bzw. ein Extrakt aus 1 g Droge in 1000 ml Wasser gerade noch bitter schmeckt.

In der Regel sind Bitterstoffe Salze und somit in Wasser löslich und damit von Substraten sehr leicht abwaschbar. Im Rahmen der vorliegenden Erfindung wird der Bitterstoff mit einer wässrigen Polymerdispersion, wässrigen Polymeremulsion oder wässrigen Polymerlösung auf der Außenseite des Schlauchs aufgebracht und liegt somit nach der Verdunstung des Wassers homogen verteilt und gebunden in der Polymermatrix vor, wodurch er zum Beispiel durch Regenwasser nicht einfach wieder entfernt werden kann.

Die Menge an Bitterstoff beträgt bevorzugt 10 bis 10.000 ppm, besonders bevorzugt 20 bis 2.500 ppm und ganz besonders bevorzugt 100 bis 2.000 ppm.

Die Angabe ppm (parts per million) bezieht sich auf die zusätzliche Beschichtung. Die angegebenen Mengen geben die Gesamtmenge aller in der Beschichtung vorhandenen Bitterstoffe an.

Der erfindungsgemäße Schlauch kann einlagig oder mehrlagig ausgebildet sein, wobei es sich bevorzugt um einen mehrlagigen Schlauch handelt.

Bei einer einlagigen Variante besteht der Schlauch nur aus einer Polymerlage, neben der erfindungsgemäß vorhandenen zusätzlichen Beschichtung.

Handelt es sich um einen mehrlagigen Schlauch, so enthält dieser wenigstens eine Lage aus einer Polymermischung und eine wenigstens eine Festigkeitsträgerlage. Bildet die Festigkeitsträgerlage die Außenlage des Schlauches, so wird dieser Schlauch auch als Umlageschlauch bezeichnet.

Im Falle eines Umlageschlauches kann durch Tränken des Schlauches die zusätzliche Beschichtung nicht nur an der Oberfläche des Schlauches zu finden sein, sondern die außen liegende Festigkeitsträgerlage kann nahezu vollständig von der zusätzlichen Beschichtung durchdrungen sein.

Die Festigkeitsträgerlage kann allerdings auch nur als Zwischenlage, z.B. eingebettet zwischen zwei Polymerlagen, vorliegen.

In diesem Fall bildet eine Polymerlage die äußere Lage des Schlauches, auf der erfindungsgemäß die zusätzliche Beschichtung aufgebracht wurde.

Die Festigkeitsträgerlage kann ein- oder mehrschichtig ausgebildet sein und ist aus einem textilen Flächengebilde aufgebaut. Das textile Flächengebilde der Festigkeitsträgerlage kann ein Gewebe, Gewirk oder Gestrick sein. Die diesbezüglichen Werkstoffe können Baumwolle (BW) Reyon (CV), Modal (CMD), Glasfaser (GF), Polyamid (PA), Polyimid (PI), Aramid, insbesondere para-Aramid oder meta-Aramid, Polyvinylacetal (PVA), Polyetheretherketon (PEEK), Polyester, insbesondere Polyethylentherephthalat (PET) oder Polyethylen-2,6-naphthalat (PEN), Polysulfon (PSU), Polyoxadiazol (POD), Polyphenylen oder Polyphenylenderivat, insbesondere Polyphenylensulfid (PPS), sein. Auch Hybridkonzepte, beispielsweise in Form eines Mischzwirns, können zum Einsatz gelangen.

Bevorzugt werden CMD, CV, BW, GF oder PES allein oder in Kombination eingesetzt, da diese am besten mit der Temperaturbeständigkeit der eingesetzten Bitterstoffe harmonieren.

Bevorzugt ist es, wenn das textile Flächengebilde aus Stapelfasern aufgebaut ist, da diese eine gute Durchdringung mit der zusätzlichen Beschichtung gewährleisten.

Als Polymere für die Polymerlage des Schlauches können alle der fachkundigen Person bekannten Polymere allein oder in Kombination eingesetzt werden. Es kann sich hierbei um Thermoplaste (TP), Thermoplastische Elastomere (TPE) oder Elastomere handeln.

Insbesondere im Motorraum eines Fahrzeugs muss der Schlauch eine ausreichende Flexibilität aufweisen, so dass als Polymere bevorzugt Elastomere zum Einsatz kommen.

Hierbei ist das Elastomer bevorzugt ausgewählt ist aus der Gruppe, bestehend aus Ethylen-Propylen-Mischpolymerisat (EPM) und / oder Ethylen-Propylen-Dien-Mischpolymerisat (EPDM) und / oder Nitrilkautschuk (NBR) und / oder (teil)hydrierter Nitrilkautschuk (HNBR) und / oder Fluor-Kautschuk (FKM) und / oder Chloropren-Kautschuk (CR) und / oder Naturkautschuk (NR) und / oder Styrol-Butadien-Kautschuk (SBR) und / oder Isopren-Kautschuk (IR) und / oder Butylkautschuk (IIR) und / oder Brombutylkautschuk (BIIR) und / oder Chlorbutylkautschuk (CIIR) und / oder Butadien-Kautschuk (BR) und / oder Chloriertes Polyethylen (CM) und / oder Chlorsulfoniertes Polyethylen (CSM) und / oder Polyepichlorhydrin (ECO) und / oder Ethylen-Vinylacetat-Kautschuk (EVA) und / oder Acrylat-Kautschuk (ACM) und / oder Ethylen-Acrylat-Kautschuk (AEM) und / oder Silikonkautschuk (MQ, VMQ, PVMQ, FVMQ) und / oder fluorierter Methylsilikonkautschuk (MFQ) und / oder perfluorinierter Propylen-Kautschuk (FFPM) und / oder Perfluorcarbon-Kautschuk (FFKM) und / oder Polyurethan (PU).

Es versteht sich von selbst, dass bei Verwendung von einem oder mehreren Elastomeren als Polymer für die Polymerlage neben dem Elastomer bzw. den Elastomeren noch weitere Bestandteile in der Polymerlage vorhanden sind, wie z. Bsp. wenigstens einen Vernetzer oder ein Vernetzersystem (Vernetzungsmittel und Beschleuniger) und / oder wenigstens ein Füllstoff und/oder wenigstens ein Verarbeitungshilfsmittel und / oder wenigstens ein Weichmacher und/oder wenigstens ein Alterungsschutzmittel sowie gegebenenfalls weitere Zusatzstoffe (z. B. Farbpigmente). Diesbezüglich wird auf den allgemeinen Stand der Kautschukmischungstechnologie verwiesen.

## Patentansprüche

1. Schlauch, der auf seiner nach außen weisenden Schicht eine zusätzliche Beschichtung enthält, wobei die Beschichtung wenigstens ein Polymer und wenigstens einen Bitterstoff enthält, **dadurch gekennzeichnet, dass** der Bitterstoff Denatoniumbenzoat ist und dass der Polymer wenigstens ein Acrylat umfasst.

2. Schlauch nach Anspruch 1, **dadurch gekennzeichnet, dass** er einlagig oder mehrlagig ausgebildet ist.

3. Schlauch nach Anspruch 1 oder 2, **dadurch gekennzeichnet, dass** die zusätzliche Beschichtung 10 bis 10.000 ppm wenigstens eines Bitterstoffs enthält.

4. Schlauch nach einem der Ansprüche 1 bis 3, **dadurch gekennzeichnet, dass** es sich um einen Umlageschlauch handelt.

## Claims

1. Hose which on its outward-facing layer contains an additional coating, wherein the coating contains at least one polymer and at least one bitterant, **characterized in that** the bitterant is denatonium benzoate and **in that** the polymer comprises at least one acrylate.

2. Hose according to Claim 1, **characterized in that** it is configured as a single-layer or multi-layer hose.

3. Hose according to Claim 1 or 2, **characterized in that** the additional coating contains 10 to 10 000 ppm of at least one bitterant.

4. Hose according to any of Claims 1 to 3, **characterized in that** it is a mantle hose.

## Revendications

1. Tuyau, qui contient sur sa couche orientée vers l'extérieur un revêtement supplémentaire, le revêtement contenant au moins un polymère et au moins une substance amère, **caractérisé en ce que** la substance amère est le benzoate de dénatonium et **en ce que** le polymère comprend au moins un acrylate.

2. Tuyau selon la revendication 1, **caractérisé en ce qu'**il est réalisé sous forme monocouche ou multicouche.

3. Tuyau selon la revendication 1 ou 2, **caractérisé en ce que** le revêtement supplémentaire contient 10 à 10.000 ppm d'au moins une substance amère.

4. Tuyau selon l'une des revendications 1 à 3, **caractérisé en ce qu'**il s'agit d'un tuyau de prélèvement.
